# EUROPÄISCHE PATENTANMELDUNG

(11) **EP 4 059 906 A1**
(43) Veröffentlichungstag der Anmeldung: **21.09.2022**
(21) Anmeldenummer: 22159091.2
(22) Anmeldetag: 28.02.2022
(51) Int. Cl.: C04B 20/04, C04B 28/02

(54) **VERWENDUNG VON KALZINIERTEN VULKANISCHEN AUSGANGSGESTEINEN ALS ZEMENTBESTANDTEIL**

(30) Priorität: 16.03.2021 DE 102021106294
(71) Anmelder: Stephan Schmidt KG, 65599 Dornburg-Langendernbach (DE)
(72) Erfinder: Schellhorn, Matthias, 65549 Limnburg (DE); Diedel, Ralf, 56206 Hilgert (DE)
(74) Vertreter: Weckenbrock, Matthias

(57) **Zusammenfassung**

Die vorliegende Erfindung betrifft die Verwendung von im Mineralbestand abgewandelten vulkanischen, basischen Ausgangsgesteinen in Form von alterierten Basalten und/oder Andesiten, Tuffen oder vulkanischen Aschen basaltischer Herkunft als Ausgangsmaterial zur Herstellung hydraulisch aktiver Zementbestandteile, ein Verfahren zur Herstellung dieser Zementbestandteile und diese Bestandteile enthaltende Zemente.

## Beschreibung

Die vorliegende Erfindung betrifft die Verwendung von kalzinierten vulkanischen, basischen Ausgangsgesteinen als Zementbestandteil oder Zementhauptbestandteil. Weiterhin betrifft die vorliegende Erfindung einen neuen Zementtyp auf der Basis von Portlandzementklinkern, der die entsprechend aufbereiteten Ausgangsgesteine als Bestandteil enthält. Schließlich umfasst die vorliegende Erfindung ein Verfahren zur Aufbereitung der genannten Ausgangsgesteine und der anschließenden Herstellung eines Zements enthaltend diese aufbereiteten Ausgangsgesteine und schließlich auch ein Verfahren zur Herstellung von Betonmaterialien, welche den erfindungsgemäßen Zement umfassen.

Beton ist der wichtigste Baustoff überhaupt. Er besteht aus Stein- und Sandaggregaten, die durch ein zementartiges oder hydraulisches Bindemittel gebunden sind. Zement wird durch Mahlen von Portlandzementklinker mit Calciumsulfat mit oder ohne weitere Zusatz- und/oder Klinkerersatzmaterialien gewonnen. Kalkstein ist ein Beispiel für ein Klinkerersatzmaterial.

Portlandzementklinker, der Hauptbestandteil der gebräuchlichsten Zementtypen, wird durch Kalzinierung von Kalkstein mit aluminium- und eisenhaltigen Rohstoffen bei ca. 1.450 - 1.500°C in einem Drehrohrofen hergestellt. Der hohe Energieverbrauch zur Erhitzung der Materialien kombiniert mit dem durch Zersetzung des Kalksteins freiwerdenden Kohlendioxid führt zu einer Emission von ca. 0,8 kg CO₂ pro kg erzeugtem Portlandzementklinker.

Aufgrund der weltweit ansteigenden Bauaktivitäten wird erwartet, dass sich die weltweite Zementproduktion im Jahr 2050 gegenüber 2010 mehr als verdoppelt haben wird mit entsprechendem Ausstoß des Klimagases CO₂.

Es besteht somit generell die Aufgabe, eine Erhöhung der Zementproduktionskapazität bei möglichst gleichzeitiger Reduktion der damit verbundenen CO₂-Emissionen sicherzustellen. Die wichtigste Maßnahme in diesem Zusammenhang ist der Ersatz der Zementklinker durch andere geeignete hydraulische Bindemittel, die eine günstigere Energie- und Klimabilanz bei ihrer Bereitstellung aufweisen. Allerdings ist jedoch der Einsatz solcher Ersatzmaterialien durch ihre mangelnde Verfügbarkeit begrenzt.

Weit verbreitet sind Portlandkalksteinzemente, die neben Zementklinker als Hauptbestandteil 20 bis 35 Gew.-% Kalkstein enthalten können. Die Substitution von Zementklinker durch Kalkstein führt in der Regel zu geringeren Festigkeiten, da der größte Teil des Kalksteins bei Einsatz des so hergestellten Zements nicht wie ein hydraulisches Bindemittel reagiert.

Eine Ausnahme ist in der EP 0 640 062 B1 für die Verwendung von Kalkstein in Kombination mit mineralisiertem Zementklinker beschrieben. Hier werden höhere Festigkeiten erzielt als es dem sogenannten Verdünnungseffekt durch Kalkstein entspricht. Aber auch hier sind die Festigkeiten (z.B. die Standardmörtelfestigkeiten oder die Festigkeiten der mit diesen verdünnten Zementen hergestellten Betonbauteilen) bereits merklich verringert, wenn der Klinkerersatz durch Kalkstein 10 bis 15 Gew.-% im fertigen Zement übersteigt. Allgemein wird die Festigkeit durch die Faktoren Feinheit der Portlandzementklinkerfraktion und der anderen Komponenten und durch das Verhältnis von Wasser zu Bindemittel (z.B. Klinker und Kalkstein) bestimmt. Trotz des verdünnenden Effekts von Kalkstein auf z.B. die Standardmörtelfestigkeiten machen Portlandkalkzemente einen erheblichen Anteil an der Zementproduktion aus. Die Zugabe von Kalkstein spielt daher eine wichtige Rolle bei der Reduzierung der CO₂-Emissionen bei der Zementherstellung.

Für höherfeste Betone werden alternative Klinkerersatzmaterialien benötigt, die selbst zur Festigkeitsentwicklung und gleichzeitig zur CO₂-Reduktion bei der Zementherstellung beitragen. Hierfür existieren zwei Hauptklassen von Ersatzmaterialien in der europäischen Zementnorm: granulierte Hochofenschlacke (GBFS) und natürliche oder künstliche Puzzolane. Das wichtigste künstliche Puzzolan ist dabei Flugasche. Zu den natürlichen Puzzolanen zählen z.B. Vulkanaschen. Aber auch hier stellt sich das Problem der ausreichenden und wirtschaftlichen Verfügbarkeit solcher Ersatzmaterialien.

Ein Beitrag zur genannten Problemlösung wird in der Bereitstellung anderer Klassen von Puzzolanen gesehen.

Hierfür wird in der US 5,626,665 die Verwendung von auf 500-800 °C erhitzten Tonen vorgeschlagen. Allerdings gilt, dass die meisten Arten von Tonen, die in ausreichenden Mengen gefunden werden, keinen zufriedenstellenden Beitrag zur Festigkeit leisten.

US 4,737,191 beschreibt die Verwendung einer Mischung aus Ton und Kalkstein, die bei 700-900 °C in einer CO₂-Atmosphäre wärmebehandelt wird, als Klinkerersatzmaterial. Die angegebenen Festigkeiten sind jedoch deutlich geringer als bei einem Portlandzement.

US 1,521,967 betrifft eine trockene Mörtelmischung aus Sand, Portlandzement, Ton und Kalkstein, bei der Kalkstein und Ton bei 650 °C bzw. 482 °C wärmebehandelt werden. Angaben zur erhaltenen Mörtelfähigkeit fehlen jedoch.

EP 0 895 972 A1 offenbart einen alkalischen, hydraulischen Al, Fe, Silikatzement, der Portlandzementklinker, Metakaolin und Dolomit enthält und bei 800 - 950°C gesintert wird. Dabei wird der Dolomit unter CO₂-Emission zu CaO und MgO zersetzt.

US 6,030,447 bezieht sich auf ein zementartiges Material, welches Portlandzement, CaO, Si-haltiges Material wie gemahlenen Sand und ein dehydroxyliertes Tonmineral wie Metakaolin umfasst. Aussagen über CO₂-Reduktionen in Bezug auf die Standardzementfestigkeit fehlen.

Schließlich fasst die WO 2010/130511 A1 den vorgenannten Stand der Technik zusammen und beschreibt einen Zement, der Portlandzementklinker, ein wärmebehandeltes Tonmaterial und ein gegebenenfalls wärmebehandeltes Carbonatmaterial umfasst. Bei dem Carbonatmaterial handelt es sich bevorzugt um Kalkstein (Calciumcarbonat) und bei dem wärmebehandelten Tonmaterial handelt es sich bevorzugt um kalzinierten Ton bzw. um ein Aluminosilikatglas oder ein Calciumaluminosilikatglas, das bis zu 35 Gew.-% CaO enthält. Die bevorzugten Tonmaterialien gehören zur Kaolingruppe (Kaolinit, Dickit, Nacrit oder Halloysit), zur Smektit- oder Vermiculitgruppe.

Weiterhin wird in der Literatur die Verwendung von kalziniertem Bentonit als Zementbestandteil zur Kosten- und CO₂-Reduktion bei der Zementherstellung beschrieben (Applied Clay Science 168(2019) 36-42).

Es besteht somit weiterhin die Aufgabe zur Bereitstellung verbesserter Zementmischungen, die insbesondere bzgl. der Herstellkosten, der CO₂-Emissionen und der erzielten Festigkeitswerte (z.B. Druckfestigkeit) für daraus hergestellte Materialien und Bauteile weiter verbessert sind.

Zur Lösung dieser Aufgabe schlägt die vorliegende Erfindung die Verwendung spezieller, bisher noch nicht eingesetzter Rohstoffe als Ersatzstoffe für Portlandzementklinker vor. Die vorliegende Erfindung betrifft somit die Nutzbarmachung von stark zersetzten, geologisch alten und im Mineralbestand abgewandelten vulkanischen, basischen Ausgangsgesteinen in Form von alterierten Basalten und/oder Andesiten, Tuffen oder vulkanischer Aschen basaltischer Herkunft. Es ist bekannt, dass derartige Gesteine zu Bentoniten umgewandelt werden können, deren Einsatz für vielseitige Verwendungszwecke, wie z.B. im Bauwesen oder als Substrat im Pflanzenbau, hinreichend bekannt ist. Die hier beschriebenen Gesteine sind aber aufgrund ihrer Eigenschaften weder als das zeitlich weit zurückliegende Ursprungsprodukt (Basalt, Tuff oder Asche) charakterisierbar oder verwendbar. Noch handelt es sich um Bentonite, die am Ende des Umwandlungsprozesses stehen, deren Bildung bei den erfindungsmäßigen Gesteinen aber noch nicht abgeschlossen ist. Sie befinden sich im Übergangsstadium eines Basaltes, eines Tuffes oder basaltischer Aschen hin zu einem Bentonit oder einem bentonitähnlichen Tongestein. Man kann diese Gesteine auch als teilweise bentonisiert bezeichnen. Phasenanalysen können zur näheren Charakterisierung dieser Gesteine beitragen. Gesteine dieser Art findet man in Deutschland z.B. im Vogelsberg und insbesondere im Westerwald. Die Vorkommen sind generell korreliert mit basischen und foiden Hartgesteinen, was ein weltweites Auftreten nahelegt. Da diese Rohstoffe bisher nahezu ungenutzt sind, finden sich auch kaum diesbezügliche Publikationen.

Die genannten Gesteine, die bislang keine kommerzielle Verwendung gefunden haben, haben sich überraschenderweise als tauglich und vorteilhaft erwiesen für die Verwendung als kalzinierter Rohstoff bei der Zementherstellung. Diese kalzinierten Rohstoffe eignen sich für den Einsatz als hydraulische Bindemittel bzw. als hydraulisch aktiver Zement- oder Zementhauptbestandteil und damit für den Ersatz der unter Kosten- und Klimagesichtspunkten ungünstigen Portlandzementklinker. Die Erfindung trägt somit unmittelbar zur Reduktion der CO₂-Emissionen (niedrige Kalzinierungstemperatur/ niedriger Energieverbrauch) und zur Reduktion der Energiekosten bei der Zementherstellung bei.

Somit betrifft die vorliegende Erfindung die Verwendung der genannten Ausgangsgesteine als Rohstoff für die Zementherstellung im weiteren Sinn. Weiterhin betrifft die Erfindung die Verwendung von teilweise bentonisierten oder alterierten basischen, vulkanischen Ausgangsgesteinen, wie beispielsweise Basalten, Andesiten, basaltischen Aschen und/oder Tuffen, als Ausgangsstoff für die Herstellung von Kalzinaten, die als hydraulisch aktiver Zementbestandteil oder Zementhauptbestandteil und Portlandzementklinkerersatz eingesetzt werden können.

Die erfindungsgemäßen Rohstoffe (Ausgangsgesteine) weisen bevorzugt Glasrelikte oder generell Glasphasen in Anteilen von 5-70 Gew.-%, vorzugsweise 10-30 Gew.-%, auf, die nach der Kalzination der Rohstoffe als hydraulisch aktiver Bestandteil reagieren.

Da es sich bei den erfindungsgemäßen Rohstoffen um sogenannte Übergangsmaterialien handelt, ist das Ausmaß der Mineralneubildungen in diesen Materialien ein weiterer zur Charakterisierung geeigneter Parameter. Die bevorzugten Rohstoffe sind dadurch gekennzeichnet, dass in ihnen als Mineralneubildungen Minerale der Smektit-Gruppe in Mengenanteilen von 5-90 Gew.-%, insbesondere von 20-55 Gew.-%, enthalten sind. Diese Bestandteile reagieren in kalzinierter Form als hydraulisch aktiver Bestandteil/ hydraulisches Bindemittel. Dabei liegen die Smektite in diesen Rohstoffen bevorzugt in Form von eisenreichen di- bzw. trioktaedrischem Ca-Saponit oder entsprechenden Mischkristallen vor. Gehalte an Mineralen der Smektit-Gruppe von mehr als 55 Gew.-% eröffnen solchen Materialien wiederum auch andere Anwendungsgebiete.

Weiterhin sind die erfindungsgemäßen Rohstoffe dadurch gekennzeichnet, dass in dem Rohstoff thermisch nicht hydraulisch aktivierbare Minerale, wie z.B. Quarz, Feldspat und sonstige nicht als Tonminerale zu klassifizierende Nebenbestandteile, bevorzugt zu insgesamt weniger als 40 Gew.-%, insbesondere zu insgesamt weniger als 15 Gew.-%, vorliegen. Dieser äußerst geringe Anteil nicht hydraulisch aktivierbarer Minerale ist ein wichtiges Unterscheidungsmerkmal zu Tonrohstoffen, die in der Regel deutlich mehr als 20 Gew.-% nicht hydraulisch aktivierbarer Minerale enthalten.

Die erfindungsgemäßen Rohstoffe sind in ihrer bevorzugten Form durch einen Eisengehalt, gemessen als Gehalt an Fe₂O₃, von 5-30 Gew.-%, insbesondere von 10-20 Gew.-%, gekennzeichnet.

Die Alkaligehalte der zu kalzinierenden Rohstoffe liegen bei bevorzugt weniger als 3 Gew.-%, insbesondere bei weniger als 1,5 Gew.-%. Dabei ist der Alkaligehalt grundsätzlich definiert als die Summe der Gehalte der ermittelten Alkalioxide. Für die Zwecke der vorliegenden Erfindung dargestellt als die Summe der Gehalte an K₂O und Na₂O.

Die bevorzugten erfindungsgemäßen Rohstoffe weisen eine Kationenaustauschkapazität von mindestens 15 mmol (eq) / 100g Rohstoff (trocken), vorzugsweise von mindestens 20 mmol (eq) / 100g Rohstoff (trocken), auf. Gleichzeitig liegt diese Kationenaustauschkapazität bevorzugt bei weniger als 100 mmol (eq) / 100g Rohstoff (trocken) und insbesondere bei weniger als 55 mmol (eq) / 100g Rohstoff (trocken). Der Begriff "trocken" bedeutet, dass das untersuchte Material bei 90°C bis zur Gewichtskonstanz getrocknet worden ist.

Weiterhin betrifft die vorliegende Erfindung daher einen Zement, der als Zementbestandteil oder als Zementhauptbestandteil die erfindungsgemäßen wärmebehandelten oder kalzinierten Rohstoffe enthält. Der Anteil dieser kalzinierten Rohstoffe beträgt bevorzugt 5 bis 90 Gew.-%, insbesondere 5 bis 50 Gew.-% und besonders bevorzugt 20 bis 35 Gew.-%, jeweils bezogen auf die fertige Zementmischung. Neben den kalzinierten, erfindungsgemäßen Rohstoffen enthält der erfindungsgemäße Zement vorteilhafterweise kleinere Mengen eines sulfathaltigen Materials wie z.B. Gips. Sofern nicht anders angegeben, ist davon auszugehen, dass der Sulfatgehalt im erfindungsgemäßen Endzement auf einen SO₃-Gehalt von bis zu 4 Gew.-% optimiert ist, und die erfindungsgemäß genannten Festigkeiten beziehen sich, soweit nicht anders angegeben, auf Mörtelfestigkeiten, die gemäß der europäischen Norm EN 196-1:1995 bestimmt werden. Des Weiteren kann der erfindungsgemäße Zement weitere ergänzende Bestandteile enthalten, wie diese insbesondere in der europäischen Norm EN 197-1:2000 als Hauptbestandteile, mit Ausnahme des Portlandzementklinkers, definiert sind.

Der erfindungsgemäße Zement weist damit die bevorzugten nachfolgenden Zusammensetzungen auf: Portlandzementklinker: 95 bis 10 Gew.-%, insbesondere 95 bis 50 Gew.-%, erfindungsgemäße kalzinierte Rohstoffe: 5 bis 90 Gew.-%, insbesondere 5 bis 50 Gew.-%, sulfathaltige Materialien (wie z.B. Gips): 0 bis 30 Gew.%, insbesondere 0 bis 5 Gew.-%, carbonathaltige Materialien: 0 bis 50 Gew.-%, insbesondere 5 bis 35 Gew.-%, weitere Bestandteile gemäß EN 197-1:2000: 0 bis 85 Gew.-%, insbesondere 0 bis 35 Gew.-%. Die Herstellung eines erfindungsgemäßen Zements erfolgt bevorzugt dadurch, dass man einen herkömmlichen im Handel erhältlichen Zement, der den einschlägigen Normen entspricht, mit den erfindungsgemäßen kalzinierten Rohstoffen mischt.

Weiterhin betrifft die vorliegende Erfindung ein Beton- und/oder Mörtelmaterial, welches einen erfindungsgemäßen Zement umfasst.

Die Verwendung der erfindungsgemäßen Rohstoffe bzw. kalzinierten Rohstoffe bei der Herstellung von Zement zur Verringerung der CO₂-Emissionen bei der Zementherstellung werden ebenso von der vorliegenden Erfindung umfasst wie ein Verfahren zur Herstellung des erfindungsgemäßen Zements mit Hilfe der erfindungsgemäßen Rohstoffe und weiteren Zementbestandteilen oder durch Mischen von herkömmlichen Zementen, die auf dem Markt erhältlich sind, mit den erfindungsgemäßen kalzinierten Rohstoffen.

## Patentansprüche

1. Verwendung von im Mineralbestand abgewandelten vulkanischen, basischen Ausgangsgesteinen in Form von alterierten Basalten und/oder Andesiten, Tuffen oder vulkanischen Aschen basaltischer Herkunft, deren Umwandlungsprozess zu einem Bentonit oder einem bentonitähnlichen Tongestein noch nicht abgeschlossen ist, als Ausgangsmaterial zur Herstellung von Ersatzstoffen für Portlandzementklinker in Zementmischungen.

2. Verwendung nach Anspruch 1, **dadurch gekennzeichnet, dass** in den im Mineralbestand abgewandelten vulkanischen, basischen Ausgangsgesteinen in Form von alterierten Basalten und/oder Andesiten, Tuffen oder vulkanischen Aschen Minerale der Smektit-Gruppe zu 5 bis 90 Gew.-%, insbesondere zu 20-55 Gew.-%, vorliegen.

3. Verwendung nach Anspruch 1 oder 2, **dadurch gekennzeichnet, dass** die genannten Ausgangsmaterialien einen Eisengehalt, gemessen als Gehalt von Fe₂O₃, von 5 bis 30 Gew.-%, insbesondere von 10-20 Gew.-%, aufweisen.

4. Verwendung nach einem der Ansprüche 1 bis 3, **dadurch gekennzeichnet, dass** die genannten Ausgangsmaterialien Glasrelikte oder Glasphasen in Anteilen von 5-70 Gew.-%, insbesondere in Anteilen von 10-30 Gew.-% aufweisen.

5. Verwendung von kalzinierten Ausgangsmaterialen gemäß einem der Ansprüche 1 bis 4 als Zementbestandteil.

6. Verwendung nach Anspruch 5 als Ersatz für Portlandzementklinker in einem Zement.

7. Verwendung nach Anspruch 5 oder 6, **dadurch gekennzeichnet, dass** der Zement 5 bis 90 Gew.-%, insbesondere 5 bis50 Gew.-%, an den kalzinierten Ausgangsmaterialen aufweist.

8. Verfahren zur Herstellung der kalzinierten Ausgangsmaterialien gemäß Anspruch 5, **dadurch gekennzeichnet, dass** die Ausgangsmaterialien gemäß einem der Ansprüche 1 bis 4 bei einer Temperatur von 550 bis 1300 °C, insbesondere bei einer Temperatur von 650 bis 1200 °C, kalziniert werden.

9. Verfahren nach Anspruch 8, **dadurch gekennzeichnet, dass** die Kalzinierung in einem Drehrohrofen oder Flash Calciner durchgeführt wird.

10. Zement enthaltend ein kalziniertes Ausgangsmaterial gemäß Anspruch 5.

11. Zement nach Anspruch 10, **dadurch gekennzeichnet, dass** das kalzinierte Ausgangsmaterial zu 5 bis 90 Gew.-%, insbesondere zu 5 bis 50 Gew.-% in dem Zement enthalten ist.

12. Verfahren zur Herstellung eines Zements gemäß einem der Ansprüche 10 oder 11, **dadurch gekennzeichnet, dass** ein im Handel erhältlicher Fertigzement mit den kalzinierten Ausgangsmaterialien gemischt wird.

13. Beton- oder Mörtelmaterial, **dadurch gekennzeichnet, dass** es einen Zement nach Anspruch 10 oder 11 umfasst.
